# EUROPEAN PATENT APPLICATION

(11) **EP 4 432 024 A1**
(43) Date of publication of application: **18.09.2024**
(21) Application number: 23161833.1
(22) Date of filing: 14.03.2023
(51) Int. Cl.: G05B 17/02, G05B 19/408

(54) **METHODS AND SYSTEMS FOR PROVIDING TRAINING DATA FOR MANUFACTURING PROCESSES**

(71) Applicant: Siemens Aktiengesellschaft, 80333 München (DE)
(72) Inventor: Aslan, Murat Samil, 97616 Bad Neustadt (DE)
(74) Representative: Siemens Patent Attorneys

(57) **Abstract**

A computer-implemented method for providing training data for at least one manufacturing operation type, the training data is intended to train machine learning models for monitoring a manufacturing process, the method comprising:
- receiving (1001) manufacturing data produced by a CNC machine (100) during the manufacturing process, wherein the manufacturing data is in form of time series (3001, 3002, 4002, 5001, 6001), and a part program (6005) associated with the manufacturing data,
- identifying (1002) a section (6001) of the manufacturing data, wherein the section (7001) is representative of the at least one, preferably of exactly one, manufacturing operation type,
- for the identified section (6001) of the manufacturing data, determining (1003), in the part program (6005), a starting point (6007) and an end point of the at least one manufacturing operation type, the end point corresponding to the starting point (6007),
- using the starting point (6007) and the end point to identify (1004) further sections (7001, 7002, 7003, 7004, 7005, 7006) in the manufacturing data, wherein the further sections (7001, 7002, 7003, 7004, 7005, 7006) are representative of the same manufacturing operation type,
- providing (1005) training data based on the identified sections in the manufacturing data.

## Description

The subject-matter disclosed herein relates to a computer-implemented method for providing training data for at least one manufacturing, e.g., machining, such as subtractive machining, operation type. The training data is, therefore, intended (and used) for training machine learning models for monitoring a manufacturing process comprising the above-mentioned type of the manufacturing operation.

The subject-matter disclosed herein relates also to a computer-implemented method for training a machine learning model with the above-mentioned data, wherein the ML model is trained for monitoring a manufacturing process.

Moreover, the subject-matter disclosed herein relates to a computer program for performing the above-mentioned method for providing the training data and/or for training a ML model.

Finally, the subject-matter disclosed herein relates to a computer-aided method and to a system for monitoring a manufacturing process that utilize the above-mentioned training data and/or trained ML model.

The development of ML models and their delivery to the user is governed by the Machine Learning Lifecycle (MLL). It is a process that involves the preparation of data, training (building/creating) models, and deploying them.

Data preprocessing (data preparation) plays an important role in the MLL. Together with data collection and labeling (meaning that data preprocessing includes data collection and labeling), often this step is one of the most time-consuming steps in the MLL. This step is also hard to generalize since it usually requires domain specific knowledge and special handling of context information and metadata. Therefore, special software tools which provides good visualization and interpretation of data is the key to make this step more robust, reliable, and non-error prone. Otherwise, without such tools, either data preprocessing step requires much more effort than planned, or it might lead to low quality and even erroneous data and, hence to a low performing machine learning model at the end.

Various data can be recorded from a controller of a computer numerical control (CNC) machine during manufacturing. Special controllers provide a wide range of data recording opportunities during machining - thanks to their well-designed APIs (Application Programming Interfaces). These include high frequency signals such as machine axis positions, motor torques, control deviation signals from internal control loops, as well as low frequency parameters such as tool length, tool radius, spindle speed overwrite, feedrate overwrite, machine kinematic parameters and a lot more. Correctly preprocessing the data and extracting the relevant operation sections from the data requires a good understanding of CNC control system-specific or controller-specific context information (e.g., high frequency events) in the data.

Different software tools for analysis of recorded data during machining are known from the prior art. CNC control system itself can provide a trace functionality which allows the user to record high frequency signals as well as low frequency data. Furthermore, a CNC control system's HMI (human machine interface) can provide a visualization of the recorded trace afterwards. Software products may facilitate visualization of the recorded process data from CNC control system.

However, the recorded raw data is usually not suitable for feeding it directly to a machine learning training pipeline. Some special preprocessing is needed. Although the mentioned tools provide some analysis capability on recorded data, they are not capable of further preprocessing of recorded data in such a way that it will be readily usable for feeding it through a machine learning training pipeline.

Hence there is a need for a method allowing for reliable preprocessing of data provided by a CNC control system, e.g., by a numerical control unit (NCU), for its further usage to create a machine learning model out of it.

According to one aspect of the invention, the need is covered by the above-mentioned method for providing training data, the method comprising the steps of:
- receiving, e.g., via a first interface, manufacturing data produced by a CNC machine during the manufacturing process, wherein the manufacturing data is in form of time series, and a part program, e.g., an NC code, associated with the manufacturing data,
- identifying a section of the manufacturing data, wherein the section is representative of the at least one, preferably of exactly one, manufacturing operation type,
- for the identified section of the manufacturing data, determining, in the part program, a starting point and an end point of the at least one manufacturing operation type, the end point corresponding to the starting point,
- using the starting point and the end point to determine further sections in the manufacturing data, wherein the further sections are representative of the same, at least one, manufacturing operation type, and
- providing, e.g., via a second interface, training data based on, in particular, comprising the determined sections in the manufacturing data.

It will be appreciated by the skilled person, that the amount of the manufacturing data can be huge. It can be data produced during several months of manufacturing (e.g., 7 months, as in one of the examples herein).

A part program is processed on the CNC machine. As a result of executing the part program code, the CNC machine executes operations caused by execution of corresponding program commands in the part program and thus performs a manufacturing process.

In particular, the manufacturing data is generated during the manufacturing process, which is carried out according to the part program.

In other words, the section comprises manufacturing data, produced, when a particular type of a manufacturing operation is carried out, e.g., spindle torque signal or position signal or other signals from face milling, drilling, deburring, etc.

In particular, the further sections comprise manufacturing data, which is produced when the same type of the manufacturing operation is carried out, e.g., spindle torque signal or position signal or other signals from face milling, drilling, deburring, etc.

In other words, the subject-matter targets the problem of data preprocessing in the manufacturing domain and brings a solution for processing the recorded data from CNC (computer numerical control) machines.

In an embodiment, the receiving comprises loading production data. This data is usually recorded with some other application via its trace functionality.

In an embodiment, identifying the section representative of the at least one manufacturing operation type in the manufacturing data comprises
- separating consecutive manufacturing operations by instances representative of a tool change operation.

In an embodiment, identifying the section representative of the at least one manufacturing operation type in the manufacturing data comprises
- based on the part program (on the NC code) associated with the manufacturing data, visualizing CNC machine traverse commands as a function of time.

In particular, rapid traverse sections or fast movements sections, e.g., G0 and non-GO sections, can be visualized as a function of time.

In this way, the sections in the time series corresponding to the traverse sections or fast movements sections can be easily determined.

In an embodiment, determining the starting point and the end point comprises
- visualizing the section of the manufacturing data representative of the at least one manufacturing operation type,
- visualizing a portion of the part program associated with the visualized section,
- selecting a line in the visualized portion of the part program,
- in the visualized section of the manufacturing data, visualizing a position that corresponds to the selected line of the part program.

In an embodiment, providing training data comprises
- visualizing the identified sections, especially the identified sections and the further identified sections, and, preferably, positions corresponding to the starting and to the end point for each identified section.

In an embodiment, providing training data comprises
- associating at least one feature, e.g., mean spindle torque, absolute integral of spindle torque, duration, path length, signal energy, signal maximum, signal minimum, signal mean, signal standard deviation, to each of the identified sections.

In an embodiment, the method further comprises
- visualizing the identified sections in a feature space,
- detecting outliers by an outlier detection algorithm,
- marking the detected outliers.

In an embodiment, providing training data comprises
- extracting the identified sections from the manufacturing data and storing the extracted identified sections in a memory, preferably in a file separate from the file with the received manufacturing data.

In an embodiment, providing training data, in particular, during the extraction of the identified sections, comprises
- removing data corresponding to CNC machine traverse commands, in particular, the GO-sections from the manufacturing data.

In an embodiment, the CNC machine traverse commands, in particular, the GO-sections, are removed from the extracted identified sections, i.e., after the extraction of the identified sections.

In an embodiment, the manufacturing data comprises one or more of: high-frequency signals, e.g., spindle torque signals, (target/actual) machine axis position signals, motor torque signals, control deviation signals from internal control loops, and low-frequency parameters, e.g., tool length, tool radius, spindle speed override, feedrate override, and machine kinematic parameters.

According to another aspect, a computer-implemented method for training a machine learning model for monitoring a manufacturing process is provided, the method comprising:
- providing, e.g., at a first interface, training data as described above,
- training, e.g., at a computing device, e.g., in the cloud or at the edge device, a machine learning model with the training data,
- providing, e.g., at a second interface, the trained machine learning model.

According to another aspect, a computer program is provided, the computer program comprising instructions, the instructions, when carried out by a computing device, cause the computing device to perform any one of the above-described methods.

According to another aspect, a computer-aided method for monitoring a manufacturing process is provided, the method comprising:
- carrying out the manufacturing process by a CNC machine and collecting manufacturing data in form of time series during the process,
- analyzing the manufacturing data with a trained machine learning model, the machine learning model is trained on a training data provided by the above-described method.

According to another aspect, a system is provided, the system comprising a CNC machine for carrying out a manufacturing process, a computer-readable medium comprising a computer program of Claim 12 and a processing unit operatively connected to the computer-readable medium and configured to carry out the instructions contained in the computer program.

In summary reliably methods and systems are provided to reliably preprocess the data from the CNC control system. During the preprocessing, e.g., relevant operation sections are identified, and non-relevant sections, e.g., non-extrusion (G0) movements, are removed. In this way a plurality of training data units (TDUs) is generated, which can be readily used in the MLL pipeline to train ML models. In other words, the TDUs are preprocessed data parts which can be used directly in a training pipeline to generate a machine learning model.

The above and other aspects and advantages of the subject matter disclosed herein will be further discussed in conjunction with the accompanying drawings, which indicate only some possible ways that may be practiced. The like reference characters in the drawings refer to like parts throughout.
FIG 1 shows a system for machining workpieces,
FIG 2 shows a flow diagram of a computer-implemented method for providing training data,
FIG 3 illustrates an example of visualizing recorded manufacturing data,
FIG 4 shows a visualization of a part of the manufacturing data shown of FIG 3,
FIG 5 shows manufacturing data representative of a face milling operation,
FIG 6 shows determining of starting and end points,
FIG 7 shows sections of the same machining operation type in the machining data,
FIG 8 illustrates a TDU with a spindle torque profile from the face milling operation,
FIG 9 and FIG 10 illustrate TDUs in a feature space for semi-automatic labelling,
FIG 11 illustrates a computer-implemented method for training a machine learning model with the TDUs,
FIG 12 illustrates a system for implementing the method of FIG 11, and
FIG 13 illustrates a flow chart of a computer-aided method for monitoring a manufacturing process.

The reference signs used in the figures and in the claims are used for demonstrative purposes and shall not be considered as a limitation of corresponding claim features.

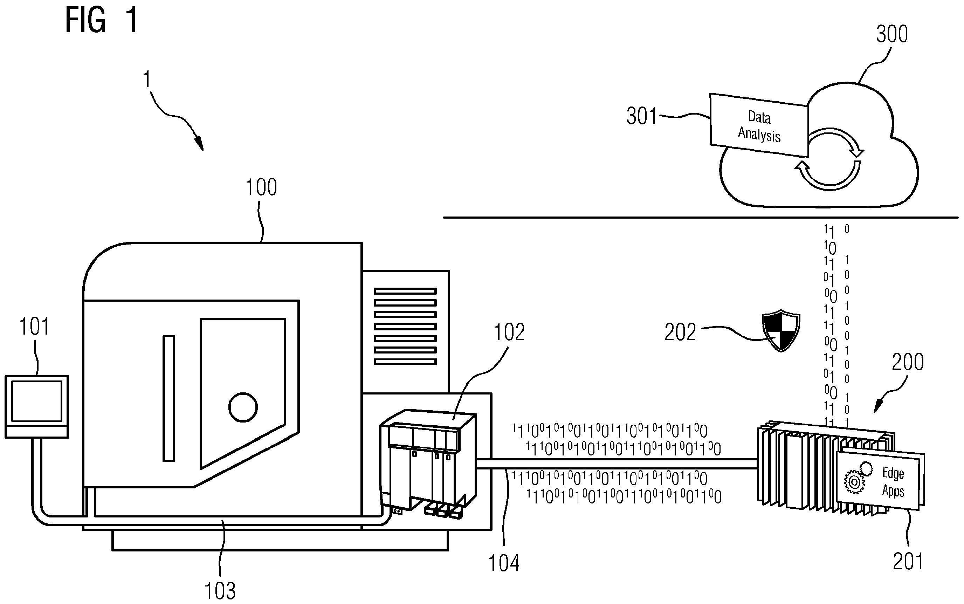

FIG 1 illustrates an example of a system 1 for manufacturing, in particular machining workpieces. The system can be located at a shop floor and comprises a CNC machining tool 100 and an edge device 200.

The machining tool 100 has an operating unit 101, usually designed as a human-machine-interface (HMI), and a numerical control unit 102. The operating unit 101 and the numerical control unit 102 are connected via an ethernet cable 103.

To collect process relevant data the edge device 200 is connected to the machining tool 100. The edge device 200 can be designed as an industrial computer and comprises means for storing data, running machine tool specific computer programs 201 - so-called edge apps - and for collecting, processing, analyzing the process relevant data generated during and/or after the machining tool's 100 operation.

The edge device 200 can comprise a platform (an IT platform) for the edge apps and is connected to the machining tool 100. The edge device can be connected to the numerical control unit 102 via industrial ethernet 104.

The edge device 200 can be mounted on the machining tool 100.

The edge device 200 can be also connected to cloud services 300 that provide computing resources for more involved analysis of the collected process data, which the edge device 200 can send to the cloud services via an uplink, e.g., via a secure uplink 202. The connection to the cloud services 300 can be a wired or wireless connection.

The data analysis can be performed by means of cloud apps 301 and have various goals: training of machining learning models, condition monitoring, root cause analysis, behavior prediction, etc.

The edge apps 201 and/or data analysis apps 301 can utilize models, e.g., trained machine learning models for performing the data analysis.

The development of ML models and their delivery to the user is governed by the Machine Learning Lifecycle (MLL). It is a process that involves the preparation of data, training (building/creating) models, and deploying them.

Data preprocessing is a part of the data preparation and plays a crucial role in the MLL. It comprises data collection and labeling and is one of the most time-consuming steps in the MLL.

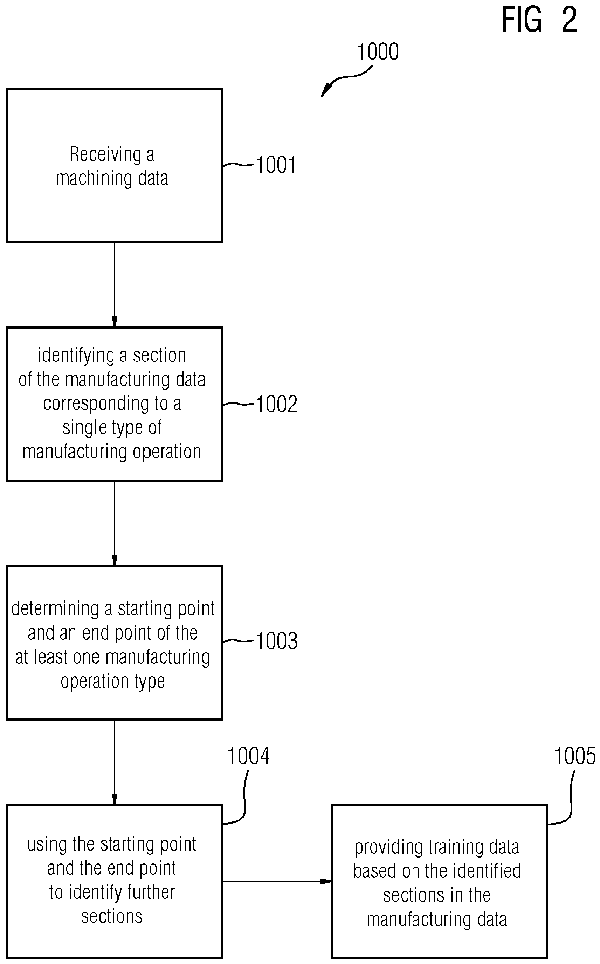

FIG 2 shows a flow diagram of a computer-implemented method 1000 for providing training data for at least one manufacturing, e.g., machining operation type.

The generated training data is extracted from the manufacturing data in form of data snippets - also called herein: training data units. In an embodiment, such snippet or training data unit (TDU) corresponds to one single manufacturing operation. However, the TDUs can also comprise data from several manufacturing operations belonging to the same manufacturing operation type, that are, e.g., consecutively repeated after each other, e.g., such operations as thread cutting or drilling.

The manufacturing data can comprise one or more of: high-frequency signals, e.g., spindle torque signals, (target/actual) machine axis position signals, motor torque signals, control deviation signals from internal control loops, and low-frequency parameters, e.g., tool length, tool radius, spindle speed override, feedrate override, and machine kinematic parameters.

The training data is intended to train machine learning models for monitoring a manufacturing, e.g., machining process.

Such ML models can be employed in the cloud 300 or even on an edge device 200.

The method comprises receiving 1001, e.g., via a first interface of an edge app 201 or cloud app 301, manufacturing, e.g., machining data, which comes in form of time series, and a part program (G-code) associated with the manufacturing data.

The part program can be processed on the CNC machine 100. Some of the commands can be entered by a user via the operating unit 101. Often the part programs are executed without any user intervention. As a result of executing the part program code, the CNC machine 100 executes operations caused by execution of corresponding program commands in the part program and thus performs the manufacturing process.

The manufacturing data can be a data produced by the CNC machining tool 100 during the manufacturing process, e.g., a process of manufacturing a work piece by means of one or more tools, e.g., cutting tools (not shown). It will be appreciated by those skilled in the art that the manufacturing data can be also a data from an additive manufacturing machine or from other type of CNC machines.

The method 1000 does not have to be in real time, i.e., during the production. The manufacturing data can be a data collected over a longer time period, e.g., weeks, months or even several months.

In the next step a section of the manufacturing data is identified 1002, the section is representative of the at least one, e.g., of exactly one, type of manufacturing operation.

The identification can be performed fully automatically, e.g., based on the G-code or by a user. This also applies to the entire process of providing the training data. The entire method can be carried out fully automatically or by assisting the user in providing the training data by means of a continued and/or guided human-machine interaction process.

Automatic identification of the section of the manufacturing data can be performed by an algorithm, e.g., by a trained algorithm, that is trained to associate line of the G-code to the manufacturing data and classify the G-code lines at the same time. In other words, such an algorithm can read the G-code line, interpret it, assign it to a specific manufacturing operation or operation type and correlate it with the time series.

In an embodiment, especially, when the user is guided through the process of providing the training data, the manufacturing data can be visualized on a visualization device, e.g., on a monitor of a personal computer or of a laptop, or on a tablet or any other visualization device that, e.g., allows user to execute edge apps 201 and/or data analysis apps 301.

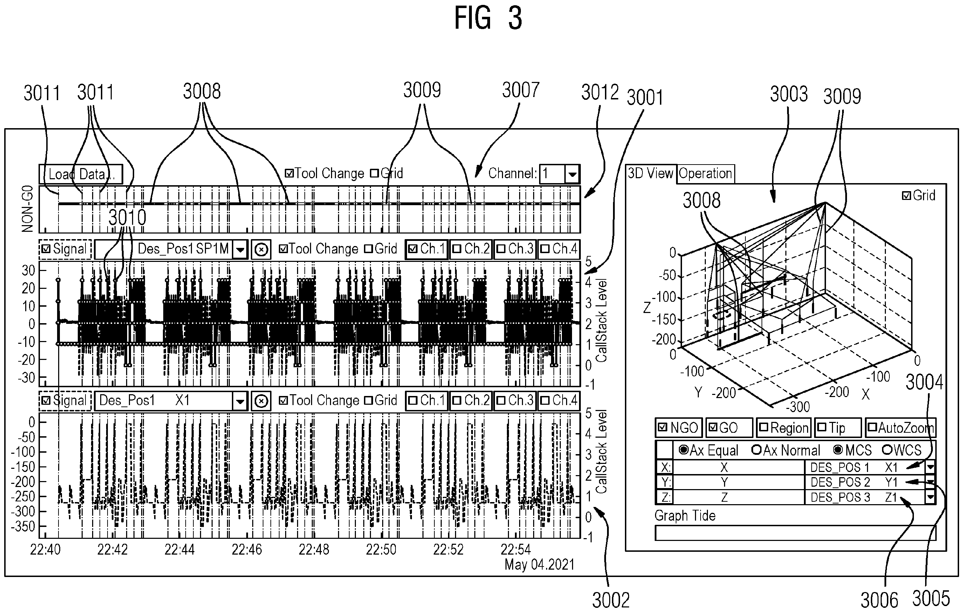

FIG 3 illustrates an example of visualizing the recorded manufacturing data 3001, 3002.

The manufacturing data 3001 (spindle torque signal), 3002 (target axis position signal) is a data from a serial production of six workpieces. Note that the repetitive pattern belonging to each workpiece is clearly visible in the visualization. On the right section in 3D view tab 3003, one can see any three of selected signals 3004, 3005, 3006 in the 3D plot. The selected signals in the present case are target positions of X1, Y1 and Z1 axis accordingly: "DES_POS|1", "DES_POS|2", "DES_POS|3".

FIG 3 also shows that fast machine (G0) movements can be filtered out and represented 3007 on the visualization device. Solid horizontal lines 3008 represent non-GO movements, grey lines 3009 are fast machine movements (G0).

The time series 3001 in the middle shows a torque of a spindle, whereas the time series in the bottom 3002 shows the desired/target positions of X1-axis of the machining tool 100.

FIG 3 also shows that the data from multichannel machining can be considered and visualized.

E.g., by checking a box "Ch. 1" events can be represented that correspond to lines in the G-code. In other words, each circle point 3010 in the middle time series 3001 corresponds to a particular line of a part program (for Channel 1 of the multichannel machining tool).

In an embodiment, tool change instances 3011 can be identified in the manufacturing data. This can be done, e.g., automatically by an algorithm that interprets part program code and classifies certain part program instructions as a tool change instance.

FIG 3 illustrates that it might be helpful to visualize the tool change instances not only in the time series 3001, 3002, but also for a visualized time-dependence of the rapid traverse or fast machine movements 3012.

In an embodiment, a zoom function is available that allows to choose a portion of the manufacturing data at the visualization device and show only this portion.

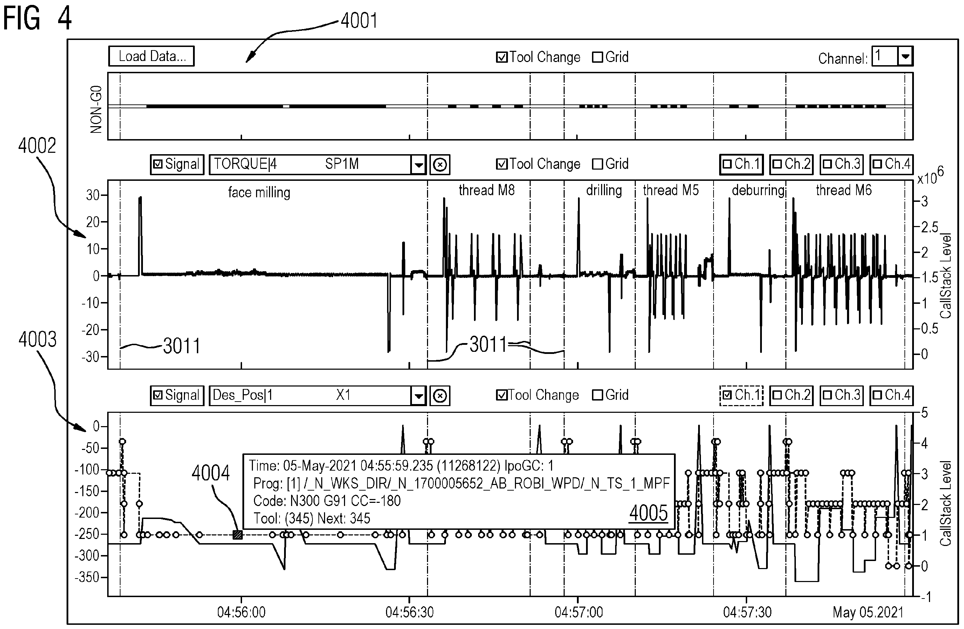

FIG 4 shows a visualization of a part of the manufacturing data shown in FIG 3. FIG 4 can be achieved by using the zoom function in FIG 3. In particular FIG 4 shows the data for a single workpiece. This improves the visibility and facilitates the indication of the section of the manufacturing data representative of a particular manufacturing operation.

Note that consecutive operations face milling, thread cutting ("thread M5", "thread M6", "thread M8"), drilling, and deburring are identified for the single workpiece manufacturing data depicted in FIG 4.

These operations are separated by the tool change instances 3011, which are shown by vertical dashed lines and can be activated / deactivated by "Tool Change" check box. As mentioned above the tool change instances 3011 can be automatically extracted from the data by considering CNC system-specific context infromation.

In the top plot 4001, NON-GO and G0 sections for each manufacturing operation can be distinguished. For example, in the second operation (Thread M8), for consecutive M8 threads can be easily identified because of the four NON-GO "islands". The middle plot 4002 shows one of the recorded high-frequency (HF) signals ("TORQUE|4" or spindle torque for the machine). In the bottom plot 4003, another HF signal (DES_POS|1, or X-axis desired/target position) is shown together with the HF block events from Channel-1 ("Ch.1" checkbox is selected).

In an embodiment, a point 4004 of time series can be selected, e.g., by tipping on the visualization device or by clicking a mouse button. When selected a frame 4005 can appear that contains metadata for the selected point 4004. In FIG 4 an event - line from the NC code is selected. The visualized content 4004 can comprise the runing part program name, selected tool number, time stamp, etc.

Displaying metadata helps to navigate through the process and to analyze the manufacturing data 4002, 4003. It will be appreciated by those skilled in the art that displaying non-G0 and G0 sections 4001 falls within the scope of displaying metadata. Information about the type of the movement G0 or not G0 is a static metadata item, i.e., an item that does not change frequently comparing to the time series data 4002, 4003. It will be appreciated by the skilled person that the changes in the time series data are related to a sampling rate with which the manufacturing data is acquired. This can be of on the order of few hundreds Hz (100 Hz to 500 Hz, especially 500 Hz) or higher, e.g., in the order of few KHz.

To further facilitate the identification 1002 of the section of the manufacturing data representative exactly one manufacturing operation type a corresponding region of the manufacturing data corresponding to the single work piece shown in FIG 4 can be selected and zoomed in.

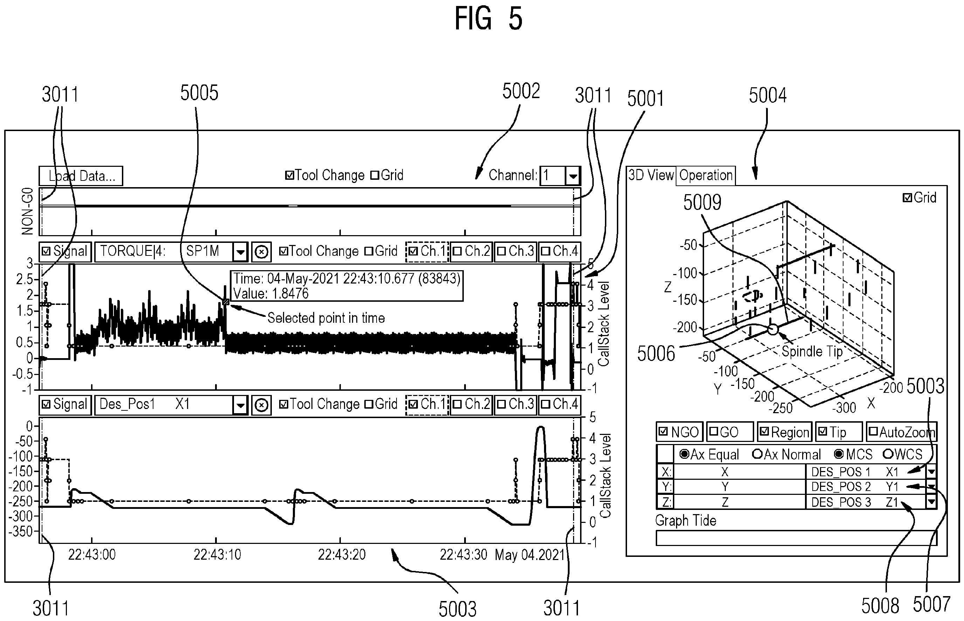

FIG 5 shows the manufacturing data 5001 representative of a face milling operation. In particular FIG 5 shows the spindle torque signal that is detected during the face milling operation. Also shown are the tool change instances 3011 and G0 and non-GO sections 5002 during the face milling operation. FIG 5 shows that, after a tool change instance (going from left to right in a direction of time in 5001 it is a first vertical dashed line), there is a G0 movement followed by first NON-GO section where the actual face milling starts. In the middle, there is a small G0 section followed by the second pass for the milling (second NON-GO section). The operation ends with a final G0 movement before the second tool change.

Furthermore, desired position X-signal 5003 is shown in FIG 5 for the same selected time frame as the spindle torque signal 5001 and the G0/non-G0 movement signal 5002.

FIG 5 illustrates a further embodiment, where the operation view comprising the signals 5001, 5002 and 5003 is associated with a 3D view 5004 (on the right side of FIG 5). A selected point 5005 in spindle torque time series signal 5001 can be visually correlated with a spindle tip 5006 in the 3D plot 5004, e.g., by activating "Tip" checkbox.

For 3D view 5004 any three signals can be used and associated with the cartesian axes X, Y, Z of the 3D plot. FIG 5 illustrates an embodiment, where desired/target position signals for corresponding axes are used and visualized in the 3D view 5004. Besides the target X-signal 5003 also a desired position Y-signal 5007 and a desired position Z-signal 5008 are used. It will be appreciated by those skilled in the art that other signals, e.g., spindle torque signals can be associated with any one of cartesian axes and visualized.

FIG 5 also shows an embodiment, in which points 5009 in the 3D plot 5004 which are associated to the currently zoomed section in 2D plots 5001, 5002, 5003 on the left are highlighted. The highlighting can, e.g., be performed by choosing a different color, e.g., blue and/or by making the points thicker, etc. The highlighting function can be switched on and off, e.g., by selecting "Region" checkbox. In this way the user can have an interpretation of the current zoomed time series in 3D plot also.

Furthermore, G0 movements and non-GO movements can be shown in the 3D view 5004.

Assembling of different type of signals and representing them in the same 3D view facilitates the analysis of the data.

Note that steps that lead to the identification of the section of the manufacturing data representative of a single type of manufacturing operation can be carried out fully automatically, e.g., by using algorithms that classify machining operations based on the syntax of the G-code. Such algorithms can be implemented using machine learning techniques, such as decision trees or support vector machines, which are trained on a dataset of G-code samples to recognize patterns and relationships between the syntax of the code and the machining operations being performed. The algorithm can then be used to classify new G-code samples based on their syntax, automatically identifying the type of machining operation being performed.

The process illustrated in FIG 3, 4 and 5 is a process of guided machine-user interaction to identify the section of the manufacturing data representative of a single type of manufacturing operation.

After the section of the manufacturing data is identified 1002, e.g., face milling, a starting point and an end point of the manufacturing operation (also called start and end trigger) of this type shall be determined 1003. These points are determined in the part program, i.e., in the portion of the part program corresponding to the identified section of the manufacturing data.

Also this step can be performed fully automatically, e.g., by a specific ML algorithm mentioned above that classifies machining operations based on the syntax of the G-code.

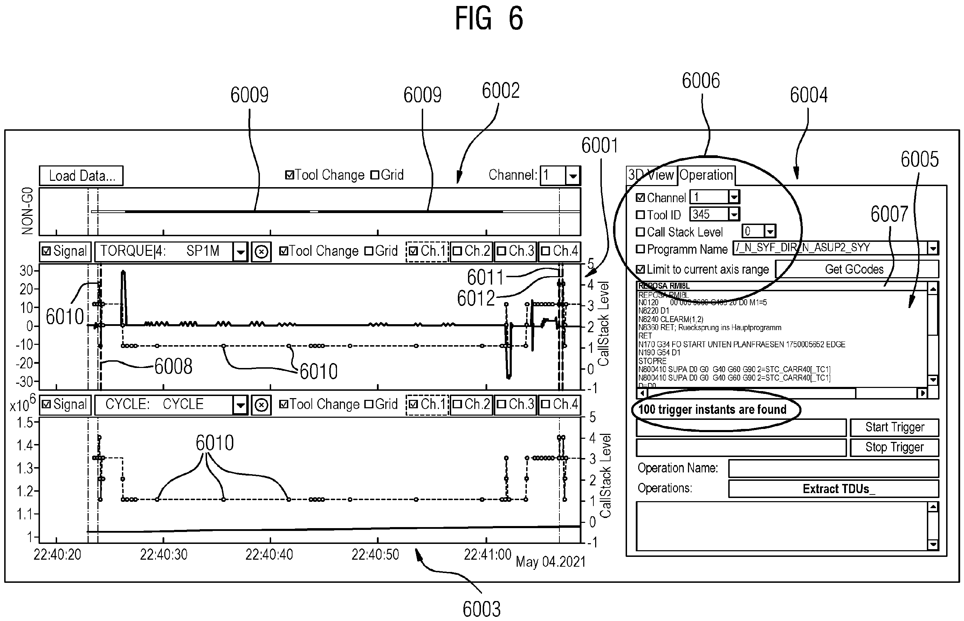

FIG 6 shows how the determining the starting and the end points of the selected/identified manufacturing operation can be performed via guided human-machine interaction.

The starting point in the part program should correspond to a command that can be found only at the beginning of the identified manufacturing operation but nowhere else. For the end point, however, there is a little bit more freedom. For the end point, it is enough, if it is a command line that is found at least once after the program line corresponding to the starting point and at the end of the selected manufacturing operation. It is not a problem if this line is found somewhere else in the G-code, e.g., after the operation. Such lines are not associated with the identified manufacturing operation and have no corresponding starting point. Therefore, they can be simply ignored by a trigger management algorithm.

FIG 6 shows spindle torque signal 6001 of the face milling operation (see also FIG 4). Also visualized is the data on G0 movement 6002 (see also Figures 3 to 5).

In a window below the spindle torque signal a cycle signal 6003 of the face milling operation is visualized.

It will be appreciated by those skilled in the art that a cycle signal in machining refers to a signal or command that starts and stops a specific machining operation or process. This signal can come from an operator, a CNC system, or an automated program. The cycle signal typically triggers the movement of cutting tools, the start and stop of spindle rotation, and other processes involved in producing a finished part. The cycle signal ensures that the machining process is performed consistently and accurately and is a critical aspect of CNC machining.

Within the scope of the present disclosure the cycle signal is a data sample counting signal. It can start from 0 and takes only integer values. It increments by 1 for every received data sample and goes to some maximum limit (e.g., 2^32-1 for 32-bit memory) depending on the word size allocated for it. After the maximum is reached it overflows and resets to 0 again.

Sometimes displaying the cycle signal can be useful. If, e.g., the cycle signal resets before it should, this can be a hint that some data samples got lost, e.g., due to connection loss to the numerical control unit.

To the spindle torque and cycle signals' 6001, 6003 right an operation tab 6004 is activated.

The operation tab comprises a NC program window 6005, where a part of the G-code is shown that corresponds to the selected section of the manufacturing data 6001, 6002 to the operation tab's 6004 left.

This allows to link the NC program G-Codes and other attributes such as Call Stack Level, Program Name or Tool ID to 2D and/or 3D graphical visualization of signals, such as 6001 and 6002, that come, e.g., from the numerical control unit 102 (see FIG 1).

The received G-Codes can be listed according to several filtering options 6006, e.g., as shown in FIG 6, channel number, tool ID, call stack level, and part program name.

The classification of the G-Codes according to different NC channels in the machine can be performed automatically.

Another very useful option is getting G-Codes associated to the current zoomed view in the 2D plots on the left by selecting the Link to the current axis range checkbox.

When the starting and the end points are to be determined, the operator (or the user) needs to select a code line from a portion of the part program corresponding to the selected manufacturing data.

In FIG 6 the operator selects a line 6007 in the NC program window 6005 of the operation tab 6004. When the line 6007 is selected, a corresponding point in the time series is highlighted, e.g., by a (vertical) dashed line 6008 in the spindle torque signal 6001. In this way the operator can immediately see, where in the time series the selected G-code line is located and also whether or not it is within the non-G0 sections 6009.

As mentioned above, the part program code lines can be overlaid over the time series, e.g., over spindle torque signal 6001, cycle signal 6003, position signal 4003 (see FIG 4), etc. Each part program code line can be represented by a circle (a dot) 6010 and the dots 6010 are connected by a straight line.

In the same manner an end point corresponding to the starting point 6007, 6008 can be determined. There can be several suitable candidates for the end point. FIG 6 shows two such candidates 6011, 6012. In an embodiment, the operator is asked to choose one of them.

After determining the starting and the end trigger accordingly, the operator can be asked to confirm her/his choice of the start and the end triggers.

After the starting and the end trigger are determined for the selected manufacturing operation, they are used to identify 1004 further sections 7001, 7002, 7003, 7004, 7005, 7006 in the manufacturing data 3001. The further sections 7001 to 7006 are representative of the same type of the manufacturing operation, as the one identified in the first place. Identifying the further sections can be implemented by an algorithm, e.g., by the ML algorithm discussed above.

In an embodiment, this type is face milling.

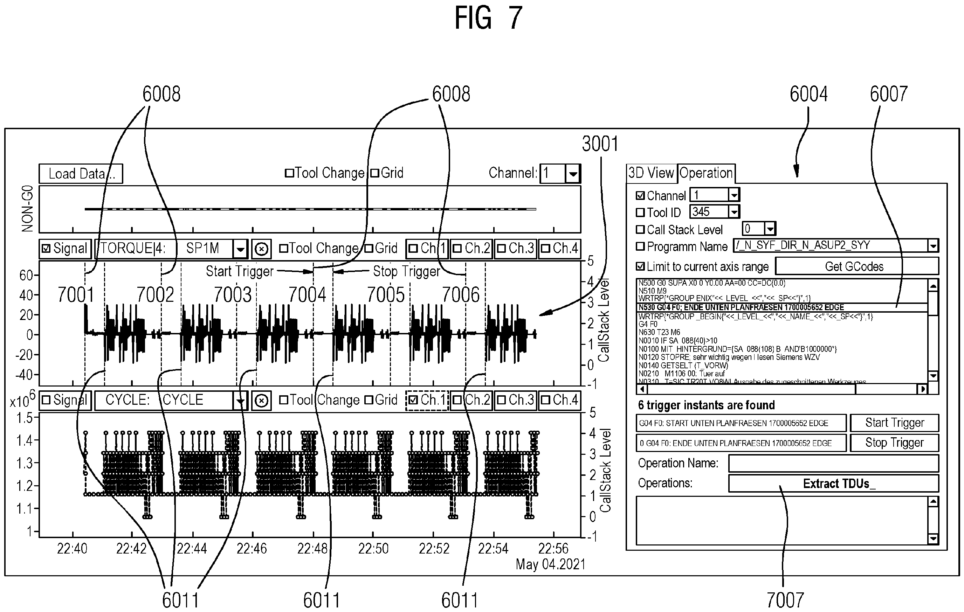

FIG 7 shows five further sections, so that there are six face milling sections 7001 to 7006 in the manufacturing data 3001, 3002 in total. Since the manufacturing data 3001, 3002 is for six workpieces, it means that each workpiece underwent face milling exactly once.

In an embodiment, the operator is asked to confirm the identified sections 7001 to 7006.

Each of the identified sections 7001 to 7006 represents a piece of training data or, in other words, a TDU (short for the training data unit, see above).

In an embodiment, the operator can visualize any queried triggers (by selecting different combination of Channel, Tool ID, Call Stack Level, Program Name), as a vertical dashed line on the time series 2D plots to see at which instant in time they are fired. This provides the user an easy interpretation and confirmation whether these triggers are suitable to determine the relevant operation or not.

Finally, the training data based on the identified sections 7001 to 7006 of the manufacturing data is provided. This can be performed via a second interface of the corresponding edge 201 or cloud app 301.

In an embodiment, providing the training data comprises extracting the TDUs from the manufacturing data. This can be done either automatically or by the operator, e.g., by pressing "Extract TDUs" button 7007 on the right side in the operation tab 6004.

In an embodiment, some of the or all G0 sections are removed during the TDU extraction. First, it saves the space in the storage medium.

Second, removing the G0 sections is an example of cleaning the data from noisy / irrelevant samples, e.g., spindle torque spikes (see, e.g., FIG 4, 5, 6) that are not relevant for cutting, for the downstream machine learning (ML) pipeline. The data with noisy / irrelevant samples should not be provided to ML training. Otherwise, if the data is not cleaned beforehand, the ML algorithm is fed with irrelevant data during the training. This can dramatically slow down the training process since it can be tedious for a ML algorithm to extract useful data from unclean data. Dirty data would disturb a ML pipeline.

Hence the cleaning of the data by removing G0 sections helps to train a ML algorithm efficiently and correctly.

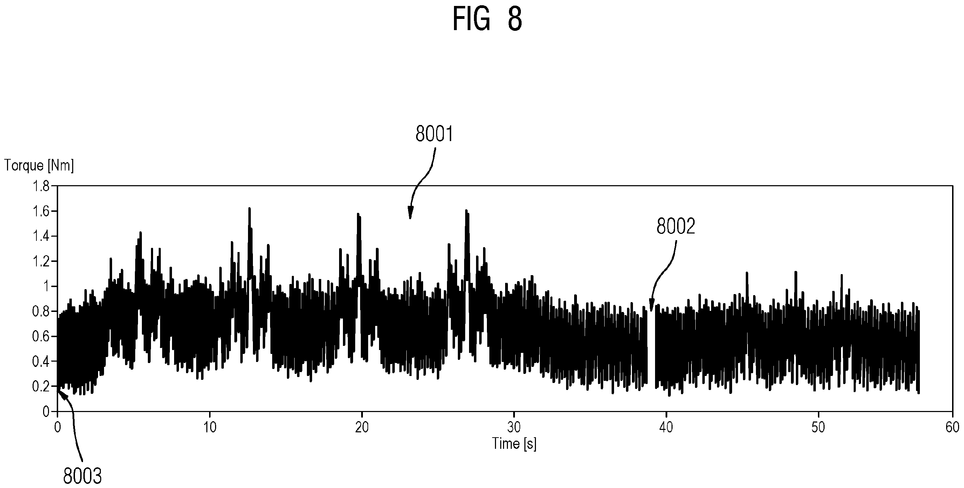

FIG 8 illustrates a single TDU 8001 with a spindle torque profile from the face milling operation. An empty region 8002 corresponds to a G0 section which has been removed in a TDU extraction step. Note that the time scale is not the time of recorded data anymore but a "normalized" time, where the timer starts at zero 8003, which corresponds to the first non-GO data sample after the start trigger in the time series (cf. Figures 3 to 7).

TDU does not contain G0 sections (by definition of TDU). The timer in FIG 8 starts with a nog-G0 section

In an embodiment, providing 1005 the training data can comprise labelling.

For instance, one or more features 9007, e.g., mean spindle torque, absolute integral of spindle torque, duration, path length, signal energy (in signal processing, for discrete time signals, it is defined as the sum of squares of absolute value of the samples of the signal), signal maximum, signal minimum, signal mean, signal standard deviation, can be associated to each TDU 7001, ..., 7006, 8001.

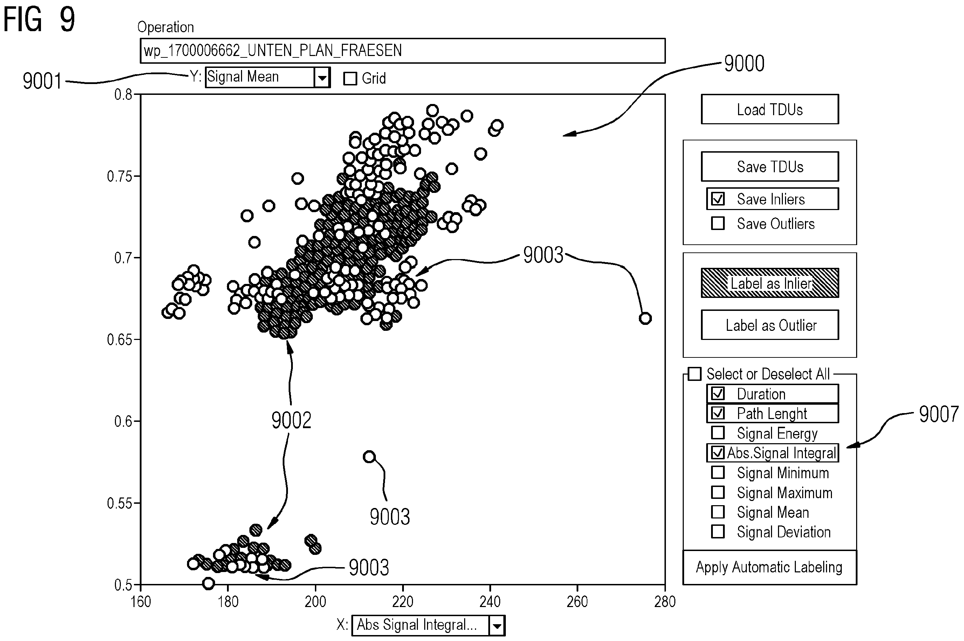

In an embodiment, the TDUs can be visualized in a feature space 9000 (see FIG 9). In the feature space the single TDUs are represented by filled circles.

Moreover, an outlier detection algorithm can be utilized to detect outliers with regard to a particular feature. In FIG 9 the selected feature 9001 is the signal mean for the selected type of manufacturing operation, e.g., the mean value of the spindle torque signal for the face milling, discussed above. It will be appreciated by the skilled person that any signal can be used here.

All point cloud can then be classified into two classes: inliers 9002 and outliers 9003. Distinguishing between these two classes can be facilitated by marking the detected outliers 9003 in a different way, e.g., by using a different color for the outliers 9003 as for the inliers 9002.

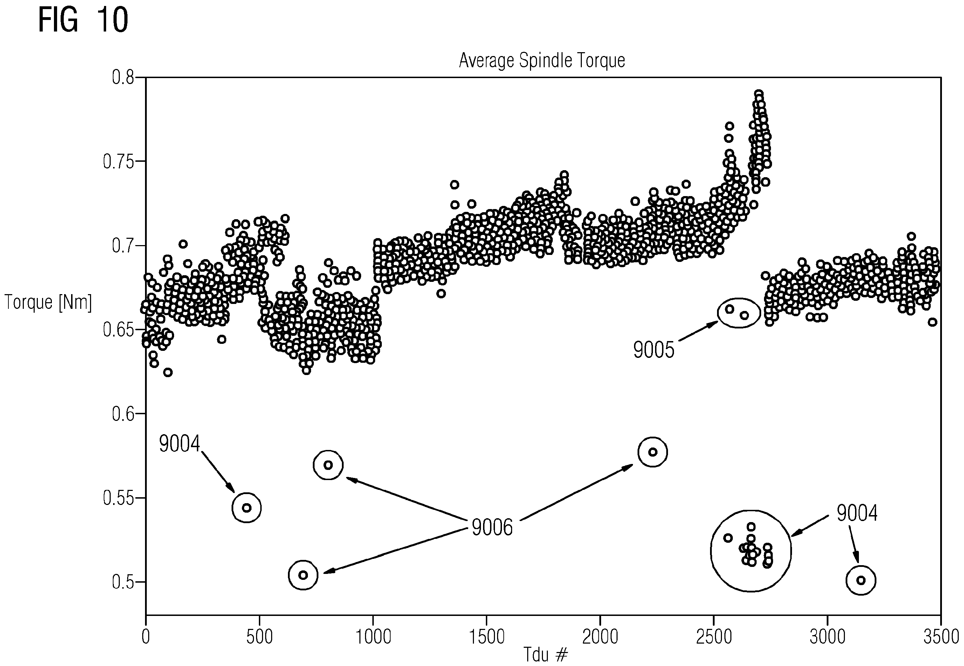

FIG 10 shows data from 3473 produced workpieces with a single TDU per workpiece. The feature represented in FIG 10 is an average spindle torque for the face milling operation. The TDUs were extracted from approximately 7 months of production data. Note that some outliers can easily be determined in such representation. Air cutting situations are those when either the production continued with a broken tool, or the NC program has been run without any workpiece.

FIG 9 and FIG 10 illustrate an example of semi-automatic labelling of the TDUs, which can be a part of the providing step 1005.

Visualization in the feature space facilitates the labelling procedure. First, TDUs are outliers are determined. For each outlier exact information can be provided on this outlier. This can be done, e.g., by clicking on the corresponding outlier, wherein after the click, e.g., a separate window pops up where the corresponding time series for a selectable machining parameter is visualized. This information provided the selected TDU can be classified.

E.g., some of the TDUs are classified as "air cutting events".

In air cutting, the tool is still attached to the spindle, but the process takes place without any workpiece, hence the name air cutting. The observed spindle torques are just due to inertial and frictional components since there is no real cutting. This may result in low mean values of the spindle torque as in FIG 10. The air cutting is usually observed at the beginning of a batch production where the operator may want to test first the NC program without any workpiece to be sure that the movements are as expected.

Some of the TDUs can be classified as "tool breakage instances" 9005. The broken tool cases happen quite often at the middle of a batch production, and even at the middle of a workpiece cutting process. In that case, the observed spindle torques are normal until tool breakage and abruptly drops after a tool breakage. This results usually in a lower mean value of the spindle torque, however, the value is still higher comparing to an air cutting event, since some machining still happens.

Then, there are also TDUs, that can be labelled as erroneous TDUs 9006. These are, e.g., the TDUs, where some data loss can be detected, e.g., by a drop in the cycle signal (see above).

In an embodiment, providing 1005 the TDUs can comprise storing the extracted TDUs in a memory, preferably in a file separate from the file with the received manufacturing data.

Removing the GO-sections can be performed after the extraction and before the storing.

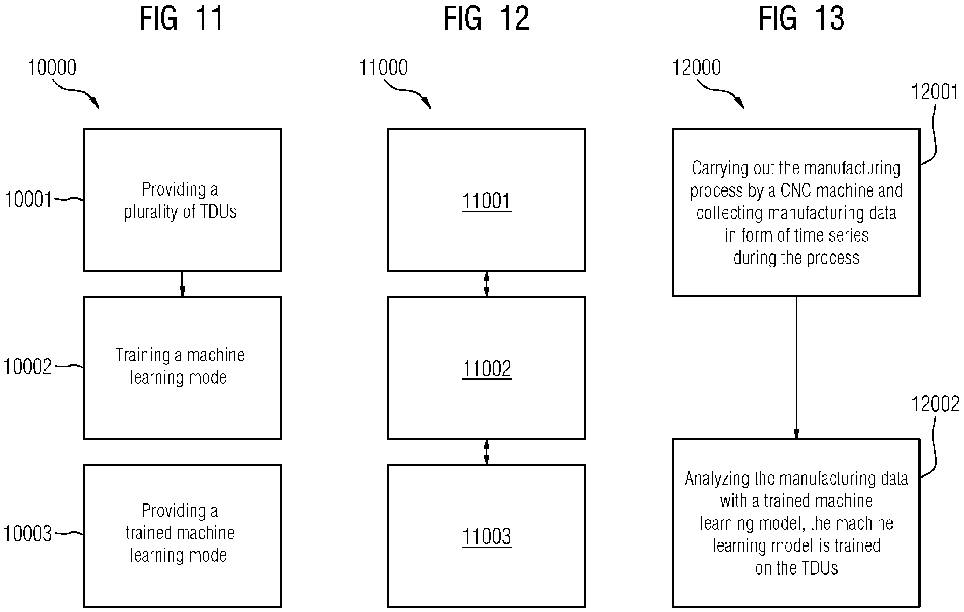

FIG 11 illustrates a computer-implemented method 10000 for training a machine learning model with the TDUs. FIG 12 illustrates a system 11000 for implementing the method of FIG 11.

There the (previously generated, e.g., as described above) TDUs are provided 10001, e.g., via a first interface 11001 of a computing device 11002.

Then a training of a machine learning model with the provided TDUs, the training is performed at the computing device 11002.

Finally, a second interface 11003 of the computing device 11002 can be used to provide 10003 the trained machine learning model.

FIG 13 illustrates a flow chart of a computer-aided method 12000 for monitoring a manufacturing process. The method starts by carrying out the manufacturing process by a CNC machine and collecting manufacturing data in form of time series during the process 12001.

Then the manufacturing data is analyzed 12002 with a trained machine learning model, the machine learning model is trained on TDUs provided as above.

In summary, the subject-matter disclosed herein provides an easy an intuitive way to preprocess NCU data recorded from a CNC machine during production. In this preprocessing it can use controller-specific knowledge, to determine e.g., channel-based G-Codes classification, filtering G0 sections and determining tool change instants and operation sections. Furthermore, it provides a feature extraction and labeling opportunity on production data by showing each operation from each workpiece as a data point in some user defined feature space. It is designed to provide reliable preprocessing of NCU data and generate TDUs for downstream model training pipeline.

The above-described embodiments of the present disclosure are presented for purposes of illustration and not of limitation. In particular, the embodiments described with regard to figures are only few examples of the embodiments described in the introductory part. Technical features that are described with regard to systems can be applied to augment methods disclosed herein and *vice versa.*

## Claims

1. A computer-implemented method for providing training data for at least one manufacturing operation type, the training data is intended to train machine learning models for monitoring a manufacturing process, the method comprising:
- receiving (1001) manufacturing data produced by a CNC machine (100) during the manufacturing process, wherein the manufacturing data is in form of time series (3001, 3002, 4002, 5001, 6001), and a part program (6005) associated with the manufacturing data,
- identifying (1002) a section (6001) of the manufacturing data, wherein the section (7001) is representative of the at least one, preferably of exactly one, manufacturing operation type,
- for the identified section (6001) of the manufacturing data, determining (1003), in the part program (6005), a starting point (6007) and an end point of the at least one manufacturing operation type, the end point corresponding to the starting point (6007),
- using the starting point (6007) and the end point to identify (1004) further sections (7001, 7002, 7003, 7004, 7005, 7006) in the manufacturing data, wherein the further sections (7001, 7002, 7003, 7004, 7005, 7006) are representative of the same manufacturing operation type,
- providing (1005) training data based on the identified sections in the manufacturing data.

2. The method of Claim 1, wherein identifying (1002) the section (7001) representative of the at least one manufacturing operation type in the manufacturing data comprises
- separating consecutive manufacturing operations by instances (3011) representative of a tool change operation.

3. The method of Claim 1 or 2, wherein identifying (1002) the section (6001) representative of the at least one manufacturing operation type in the manufacturing data comprises
- based on the part program (6005) associated with the manufacturing data, visualizing CNC machine traverse commands as a function of time (3012, 4001, 5002, 6002).

4. The method of any one of Claims 1 to 3, wherein determining (1003) the starting point (6007) and the end point comprises
- visualizing the section (6001) of the manufacturing data representative of the at least one manufacturing operation type,
- visualizing a portion (6005) of the part program associated with the visualized section,
- selecting a line (6007) in the visualized portion (6005) of the part program,
- in the visualized section (6001) of the manufacturing data, visualizing a position (6008) that corresponds to the selected line (6007) of the part program (6005).

5. The method of any one of Claims 1 to 4, wherein providing (1005) training data comprises
- visualizing the identified sections (7001, 7002, 7003, 7004, 7005, 7006) and, preferably, positions corresponding to the starting (6008) and to the end point (6011) for each identified section (7001, 7002, 7003, 7004, 7005, 7006).

6. The method of any one of Claims 1 to 5, wherein providing (1005) training data comprises
- associating at least one feature (9007) to each of the identified sections.

7. The method of Claim 6, further comprising
- visualizing the identified sections in a feature space (9000),
- detecting outliers (9003) by an outlier detection algorithm,
- marking the detected outliers (9003).

8. The method of any one of Claims 1 to 7, wherein providing (1005) training data comprises
- extracting the identified sections (7001, 7002, 7003, 7004, 7005, 7006) from the manufacturing data and storing the extracted identified sections in a memory, preferably in a file separate from the file with the received manufacturing data.

9. The method of any one of Claims 1 to 8, wherein providing (1005) training data comprises
- removing data corresponding to CNC machine traverse commands from the manufacturing data.

10. The method of any one of Claims 1 to 9, wherein the manufacturing data comprises one or more of: high-frequency signals, in particular, spindle torque signals, machine axis position signals, motor torque signals, control deviation signals from internal control loops, and low-frequency parameter signals, in particular, tool length, tool radius, spindle speed override, feedrate override, and machine kinematic parameters.

11. A computer-implemented method for training a machine learning model for monitoring a manufacturing process, the method comprising:
- providing (10001) training data as in any one of Claims 1 to 10,
- training (10002) a machine learning model with the training data,
- providing (10003) the trained machine learning model.

12. A computer program comprising instructions, the instructions, when carried out by a computing device, cause the computing device to perform a method of any one of Claims 1 to 10 and/or a method of Claim 11.

13. A computer-readable medium comprising a computer program of Claim 12.

14. A computer-aided method for monitoring a manufacturing process, the method comprising:
- carrying out (12001) the manufacturing process by a CNC machine (100) and collecting manufacturing data in form of time series (3001, 3002, 4002, 5001, 6001) during the process,
- analyzing (12002) the manufacturing data with a trained machine learning model, the machine learning model is trained on a training data provided by a method of any one of Claims 1 to 10.

15. A system comprising a CNC machine (100), in particular, a machine tool, for carrying out a manufacturing process, a computer-readable medium comprising a computer program of Claim 12 and a processing unit operatively connected to the computer-readable medium and configured to carry out the instructions contained in the computer program.
